(19) Europäisches Patentamt
European Patent Office
Office européen des brevets

(11) **EP 4 708 837 A1**

(12) **EUROPEAN PATENT APPLICATION**

(43) Date of publication:
**11.03.2026 Bulletin 2026/11**

(21) Application number: **25196135.5**

(22) Date of filing: **15.08.2025**

(51) International Patent Classification (IPC):
**H04M 9/08** (2006.01)

(52) Cooperative Patent Classification (CPC):
**H04M 9/082**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.08.2024  FI 20246067**

(71) Applicant: **Nokia Technologies Oy
02610 Espoo (FI)**

(72) Inventors:
• **MÄKINEN, Jorma Juhani
Tampere (FI)**
• **VILERMO, Miikka Tapani
Siuro (FI)**

(74) Representative: **Nokia EPO representatives
Nokia Technologies Oy
Karakaari 7
02610 Espoo (FI)**

(54) **MICROPHONE SIGNAL PROCESSING**

(57)    Various example embodiments relate to microphone signal processing. For example, a method is disclosed comprising enabling acoustic echo cancellation, AEC, processing on at least one captured microphone signal in response to a trigger event, wherein the AEC processing is performed for a first time period for providing at least one post-processed captured microphone signal. The method may also comprise applying ambient noise suppression processing on the at least one post-processed captured microphone signal, wherein a level of ambient noise suppression applied on the at least one post-processed captured microphone signal is increased from a first level to one or more second levels in response to AEC processing being enabled.

FIG. 4

EP 4 708 837 A1

## Description

### Field

Various example embodiments relate to microphone signal processing.

### Background

A user may listen to audio whilst a nearby microphone is enabled for voice capture. For example, in a communications session between first and second users, captured audio of the first user (far-end user) may be transmitted in one or more downlink signals to a second user (near-end user). The received one or more downlink signals may be output as one or more first audio signals by one or more loudspeakers associated with the second user. For example, the one or more loudspeakers may comprise a set of earphones or similar. The second user may operate an audio capture device, for example a smartphone, comprising one or more microphones for capturing their own audio for transmitting back to the first user as part of the communications session. At least some of the one or more first audio signals of the first user, when output by the one or more loudspeakers, may be captured by the one or more microphones of the audio capture device and hence the first user may hear an echo of their own voice and/or other feedback that may get progressively worse. Acoustic echo cancellation (AEC) processing methods may be used to cancel or mitigate these forms of echo.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for enabling acoustic echo cancellation, AEC, processing on at least one captured microphone signal in response to a trigger event, wherein the AEC processing is performed for a first time period for providing at least one post-processed captured microphone signal; and means for applying ambient noise suppression processing on the at least one post-processed captured microphone signal, wherein a level of ambient noise suppression applied on the at least one post-processed captured microphone signal is increased from a first level to one or more second levels in response to AEC processing being enabled.

In some example embodiments, the means for applying the ambient noise suppression processing may be disabled prior to the AEC processing being enabled and may be enabled in response to the AEC processing being enabled. In some example embodiments, the means for applying the ambient noise suppression processing may be enabled prior to the AEC processing being enabled.

In some example embodiments, the level of ambient noise suppression may be increased from the start of the first time period.

In some example embodiments, the level of ambient noise suppression may be increased gradually at a rate which is less than a rate at which the AEC processing is applied on the at least one captured microphone signal.

In some example embodiments, the rate at which the level of ambient noise suppression is increased may be in the order of seconds and the rate at which the AEC processing is increased may be in the order of milliseconds.

In some example embodiments, the level of ambient noise suppression may be maintained at the one or more second levels until at least the end of the first time period and may then be decreased towards the first level.

In some example embodiments, the level of ambient noise suppression may be decreased gradually at a rate which may be less than a rate at which the AEC processing is decreased on the at least one captured microphone signal at the end of the first time period.

In some example embodiments, the rate at which the level of ambient noise suppression is decreased may be in the order of seconds and the rate at which the AEC processing is decreased may be in the order of milliseconds.

In some example embodiments, the AEC processing may be applied to a first frequency range of the at least one captured microphone signal, and the noise suppression processing may be applied to a second frequency range of the at least one post-processed captured microphone signal, wherein the second frequency range may be determined based on the first frequency range. In some example embodiments, the second frequency range may be substantially the same as the first frequency range. In some example embodiments, the second frequency range may be wider than, and includes, the first frequency range.

In some example embodiments, the level of the ambient noise suppression processing may be based, at least in part, on a lowest frequency of the at least one captured microphone signal relative to a predetermined threshold. In some example embodiments, the level of the ambient noise suppression may be increased from the first level to the one or more second levels only if the lowest frequency of the at least one captured microphone signal is at or below the predetermined threshold. In some example embodiments, in the case that the lowest frequency of the at least one captured microphone signal is at or below the predetermined threshold, the one or more second levels may be higher than for the case that the lowest frequency of the at least one captured microphone signal is above the predetermined threshold.

The apparatus may be comprised in a user device.

According to a second aspect, there is described a method, comprising: enabling acoustic echo cancellation, AEC, processing on at least one captured microphone signal in response to a trigger event, wherein the AEC processing is performed for a first time period for providing at least one post-processed captured microphone signal; and applying ambient noise suppression processing on the at least one post-processed captured microphone signal, wherein a level of ambient noise suppression applied on the at least one post-processed captured microphone signal is increased from a first level to one or more second levels in response to AEC processing being enabled.

In some example embodiments, the ambient noise suppression processing may be disabled prior to the AEC processing being enabled and may be enabled in response to the AEC processing being enabled. In some example embodiments, the ambient noise suppression processing may be enabled prior to the AEC processing being enabled.

In some example embodiments, the level of ambient noise suppression may be increased from the start of the first time period.

In some example embodiments, the level of ambient noise suppression may be increased gradually at a rate which is less than a rate at which the AEC processing is applied on the at least one captured microphone signal.

In some example embodiments, the rate at which the level of ambient noise suppression is increased may be in the order of seconds and the rate at which the AEC processing is increased may be in the order of milliseconds.

In some example embodiments, the level of ambient noise suppression may be maintained at the one or more second levels until at least the end of the first time period and may then be decreased towards the first level.

In some example embodiments, the level of ambient noise suppression may be decreased gradually at a rate which may be less than a rate at which the AEC processing is decreased on the at least one captured microphone signal at the end of the first time period.

In some example embodiments, the rate at which the level of ambient noise suppression is decreased may be in the order of seconds and the rate at which the AEC processing is decreased may be in the order of milliseconds.

In some example embodiments, the AEC processing may be applied to a first frequency range of the at least one captured microphone signal, and the noise suppression processing may be applied to a second frequency range of the at least one post-processed captured microphone signal, wherein the second frequency range may be determined based on the first frequency range. In some example embodiments, the second frequency range may be substantially the same as the first frequency range. In some example embodiments, the second frequency range may be wider than, and includes, the first frequency range.

In some example embodiments, the level of the ambient noise suppression processing may be based, at least in part, on a lowest frequency of the at least one captured microphone signal relative to a predetermined threshold. In some example embodiments, the level of the ambient noise suppression may be increased from the first level to the one or more second levels only if the lowest frequency of the at least one captured microphone signal is at or below the predetermined threshold. In some example embodiments, in the case that the lowest frequency of the at least one captured microphone signal is at or below the predetermined threshold, the one or more second levels may be higher than for the case that the lowest frequency of the at least one captured microphone signal is above the predetermined threshold.

The method may be performed by a user device.

According to a third aspect, there is described a computer program product, comprising a set of instructions which, when executed on an apparatus, is configured to cause the apparatus to carry out a method, comprising: enabling acoustic echo cancellation, AEC, processing on at least one captured microphone signal in response to a trigger event, wherein the AEC processing is performed for a first time period for providing at least one post-processed captured microphone signal; and applying ambient noise suppression processing on the at least one post-processed captured microphone signal, wherein a level of ambient noise suppression applied on the at least one post-processed captured microphone signal is increased from a first level to one or more second levels in response to AEC processing being enabled.

In some example embodiments, the third aspect may include any other feature mentioned with respect to the method of the second aspect.

According to a fourth aspect, there is described a non-transitory computer readable medium comprising program instructions stored thereon for performing a method, comprising: enabling acoustic echo cancellation, AEC, processing on at least one captured microphone signal in response to a trigger event, wherein the AEC processing is performed for a first time period for providing at least one post-processed captured microphone signal; and applying ambient noise suppression processing on the at least one post-processed captured microphone signal, wherein a level of ambient noise suppression applied on the at least one post-processed captured microphone signal is increased from a first level to one or more second levels in response to AEC processing being enabled.. In some example embodiments, the fourth aspect may include any other feature mentioned with respect to the method of the second aspect.

According to a fifth aspect, there is described an apparatus comprising at least one processing core, at least one memory including computer program code, the at least one memory and the computer program code being configured to, with the at least one processing core, cause the apparatus to: enable acoustic echo cancellation, AEC, processing on at least one captured microphone signal in response to a trigger event, wherein the AEC processing is performed for a first time period for providing at least one post-processed captured microphone signal; and apply ambient noise suppression processing on the at least one post-processed captured microphone signal, wherein a level of ambient noise suppression applied on the at least one post-processed captured microphone signal is increased from a first level to one or more second levels in response to AEC processing being enabled..

In some example embodiments, the fifth aspect may include any other feature mentioned with respect to the method of the second aspect.

## Drawings

Example embodiments will be described, by way of non-limiting example, with reference to the accompanying drawings, in which:

FIG. 1 illustrates a communications session between first and second users;
FIG. 2 illustrates a front view of the second user during output of audio signals by an audio output device;
FIG. 3 is a flow diagram showing operations according to one or more example embodiments;
FIG. 4 illustrates an apparatus for performing the FIG. 3 operations;
FIG. 5 illustrates timing diagrams according to one or more example embodiments;
FIG. 6 illustrates a spectrogram of an audio signal representing speech and ambient audio;
FIG. 7 illustrates a spectrogram subsequent to applying acoustic echo cancellation (AEC) processing;
FIG. 8 illustrates a spectrogram subsequent to application of ambient noise suppression according to one or more example embodiments;
FIG. 9A is a flow diagram showing operations according to an implementation example in accordance with one or more other example embodiments;
FIG. 9B illustrates left and right -hand loudspeakers of an audio output device in relation to first and second microphones;
FIG. 10 illustrates example audio signal and microphone signal waveforms;
FIG.11 illustrates an example correlation process for the FIG. 10 waveforms;
FIG. 12A illustrates alignment of audio signals and microphone signals in accordance with one or more example embodiments;
FIG. 12B illustrates alignment of audio signals and microphone signals in accordance with one or more other example embodiments;
FIG. 13 illustrates a further apparatus that may be configured in accordance with one or more example embodiments;
FIG. 14 illustrates a still further apparatus that may be configured in accordance with one or more example embodiments;
FIG. 15 illustrates in greater detail an AEC module of the FIG. 14 apparatus;
FIG. 16 illustrates functional modules of an apparatus that may be configured in accordance with one or more example embodiments; and
FIG. 17 illustrates a non-transitory computer-readable medium program having instructions stored thereon for performing a method in accordance with one or more example embodiments.

## Detailed Description

Various example embodiments relate to an apparatus, method and computer program for microphone signal processing.

The processing may involve acoustic echo cancellation (AEC) processing and ambient noise suppression processing, wherein a level of ambient noise suppression is increased from a first level to one or more second levels based at least in part on the AEC processing being enabled.

As described herein, AEC processing may comprise any known method or algorithm for removing or mitigating acoustic echo components from a microphone signal; AEC processing is commonly used to cancel far-end speech received from a far-end user, wherein the far-end speech, when output via one or more loudspeakers, may be captured by one or more microphones of a near-end user, such that only, or mainly, near-end speech of the near-end user is transmitted back to the far-end user. In other examples, AEC processing is not limited to cancelling echoes from near-end speech. Other examples may include any form of speech, e.g., directional non-reverberant speech, and/or other desired audio signals.

AEC processing may produce unwanted artefacts for reasons that will be explained in detail below.

Ambient noise suppression processing, on the other hand, is an umbrella term for methods in which a particular type of audio, for example speech audio, is classified as a desired or wanted signal and other audio is classified as ambient noise or alternatively background noise. Ambient audio may for example include at least one of unwanted noise, reverberant audio, distant audio, non-speech audio or non-directional audio. References here to the term "noise" do not imply that ambient audio is necessarily unwanted in all scenarios because ambient audio may provide a more natural listening experience. Such methods may involve beamforming, machine learning (ML) -based methods, blind source separation (BSS) methods and so on. Example embodiments are not limited to any particular method.

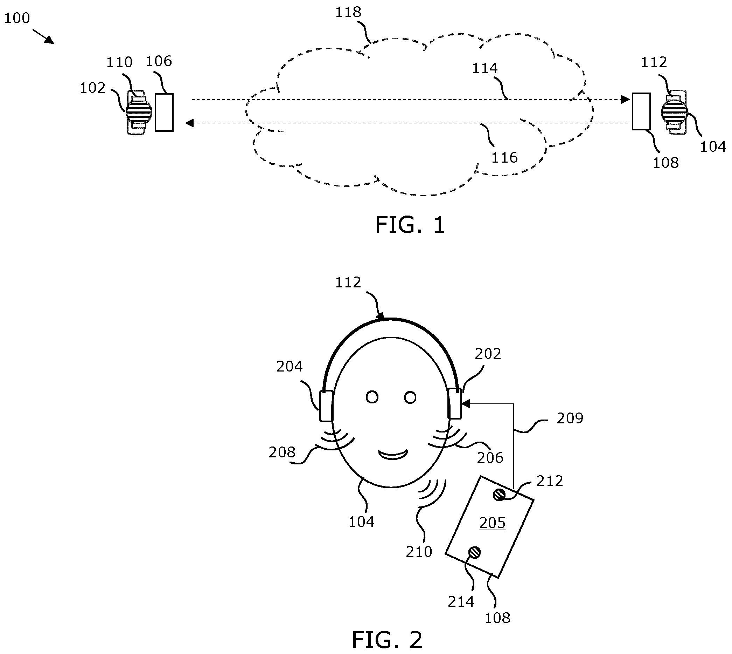

FIG. 1 shows an example scenario 100 in which a first user 102 (far-end user) and a second user 104 (near-end user) communicate as part of a communications session, for example a voice call. Other possible scenarios or use cases are described later on.

The first and second users 102, 104 may be provided with respective first and second user devices 106, 108. The first and second users 102, 104 may also be provided with respective first and second audio output devices 110, 112.

The first user device 106 may comprise one or more microphones for capture of audio of the first user 102. The one or more microphones may produce respective first microphone signals. The respective first microphone signals may be encoded and transmitted in one or more downlink signals 114 to the second user device 108 via a network 118. The second user device 108 may cause output of the received one or more dowlink signals 114 via the second audio output device 112. For example, the second user device 108 may communicate with the second audio output device 112 via a wired or wireless channel, e.g., using Bluetooth, Zigbee, WiFi or similar in the case of a wireless channel.

Similarly, the second user device 108 may comprise one or more microphones for capture of audio of the second user 104. The one or more microphones may produce respective second microphone signals. The respective second microphone signals may be encoded and transmitted as one or more uplink signals 116 to the first user device 106 via the network 118. The first user device 106 may cause output of the received one or more uplink signals via the first audio output device 110. For example, the first user device 106 may communicate with the first audio output device 110 via a wired or wireless link, e.g., using Bluetooth, Zigbee, WiFi or similar in the case of a wireless channel.

The network 118 may comprise an internet protocol (IP) network or other form of communications network, for example a Radio Access Network (RAN). Respective air interfaces between the first and second user devices 106, 108 and the network 118 may be in accordance with a cellular, or non-cellular, radio access technology (RAT) that both the first and second user devices and the network are configured to support. Examples of cellular RATs include Long Term Evolution (LTE) or fifth generation (5G) New Radio (NR) radio access technology, or 5G beyond, or sixth generation (6G) radio access technology or other communications technologies.

The first and second audio output devices 110, 112 may each comprise a set of first and second loudspeakers in any suitable form, for example a set of earphones, earbuds, headphones, or loudspeakers of a head-worn device such as an extended reality (XR) headset. The term earphones or earphones device will be used hereinafter. The first and second audio output devices 110, 112 may be of the same type or may be of different types.

The first and second user devices 106, 108 may comprise any device comprising one or more microphones (or devices connected to one or more remote microphones). The first and second user devices 106, 108 may, for example, each comprise a smartphone, tablet computer, personal computer, laptop computer, wearable computer, internet of things (IoT) computer or a digital assistant. The first and second user devices 106, 108 may be of the same type or may be of different types.

FIG. 2 is a front view of the second user 104 during output of audio signals by the second audio output device 112. The second user device 108 may communicate with the second audio output device 112 using a wireless channel such as a Bluetooth channel 209. The second user device 108 is positioned at a spaced distance from, and generally in front of, the second user 104. The second audio output device 112 comprises an earphones device comprising left and right -hand loudspeakers 202, 204 which output respective audio sounds, which are referred to hereafter as first and second audio signals 206, 208. The second user device 108 may comprise a body 205 on which may be provided first and second spaced-apart microphones 212, 214 for capture of audio 210 of the second user 104. The first and second spaced-apart microphones 212, 214 produce first and second microphone signals. In other example embodiments, there may be one microphone or two or more microphones.

At least some energy of the first and/or second audio signals 206, 208 may be captured by the first and/or second microphones 212, 214 during output. If so, the downlink signal 116 transmitted by the second user device 108 will comprise some energy of the first and/or second audio signals 206, 208. The first user 102 may therefore perceive acoustic echo, or other form of unwanted audible feedback, when said downlink signal 116 is output by the first audio output device 110.

The above scenario 100 in which the second user device 108 comprising the one or more microphones 212, 214 is physically separate from the second audio output device 112 providing the left and right -hand loudspeakers 202, 204 is particularly, although not exclusively, useful for stereo or spatial audio capture and output. A known spatial audio codec, mentioned by way of example, is the Immersive Voice and Audio Services (IVAS) codec which has been standardized by the 3rd Generation Partnership Project (3GPP) for voice services. In terms of spatial audio output, the use of an earphones device, or similar, is generally preferred over output by means of stand-alone loudspeaker systems or those integrated on user devices which tend to reproduce "tinny" sounds that lack reproduction at lower frequencies. Also, for user device loudspeakers, stereo or spatial reproduction is generally not well perceived due to said loudspeakers being relatively close together. In terms of spatial audio capture, user device microphones may be preferred over, for example, microphones that comprise part of an earphones device where the microphones will be relatively close to the user's head (with acoustic shadows from opposite sides of the user's head) and because the microphones may be relatively close to one another. There may be an unknown distance in-between microphones which depends on the size of the user's head.

In general, therefore, the use of separate audio capture and audio output devices is preferred for stereo or spatial audio capture and reproduction. Example embodiments are however not limited to this use case and other example embodiments may comprise apparatuses comprising both the audio capture and audio output devices.

AEC processing methods are known and generally involve use of an adaptive filter for estimating an acoustic transfer function, including delay, from the one or more loudspeakers to the one or more microphones, wherein the acoustic transfer function is used to subtract an adaptively filtered speaker signal from the resulting microphone signal(s) using the delay. A further, residual echo suppression part may suppress residual echoes. However, AEC processing methods may not work effectively. This may be due, at least in part, to poor adaptive filter performance. For example, there may be unknown delays between the user device wirelessly transmitting signals to the audio output device, e.g., via a Bluetooth channel, and delays associated with their subsequent processing and output. AEC processing methods may also assume that the audio capture and audio output device comprise part of the same device which uses a common clock signal. Non-linearities may also be introduced due to the relatively lower bitrate used for wirelessly transmitting the one or more audio signals to the audio output device as well as processes such as equalization and/or compression that may be performed by the audio output device. In general, AEC methods may assume that sound paths from the first and second loudspeakers to the one or more microphones are relatively constant whereas, in cases where separate audio capture and audio output devices are used, these may change relatively abruptly and frequently, for example when the user moves and/or rotates the audio capture device.

In view of the above limitations, relatively large amounts of suppression are used in AEC processing methods to counter poor adaptive filter performance, for example due to poor or only approximate time delay estimation. This may even involve enabling AEC processing before and/or after a time when echo is detected, i.e. a trigger event for enabling AEC processing. Where the audio output device comprises a set of headphones that leak relatively large amounts of audio and have a wide frequency range, even larger amounts of suppression may be required. This over-eager approach to AEC processing produces audible (larger than normal) artefacts that can be disturbing to a listening user. For example, the artefacts may be due to perceived fluctuations in the level(s) of ambient audio due to AEC processing being enabled and disabled.

Below is described an apparatus, method and computer program that may avoid or alleviate at least some of these issues.

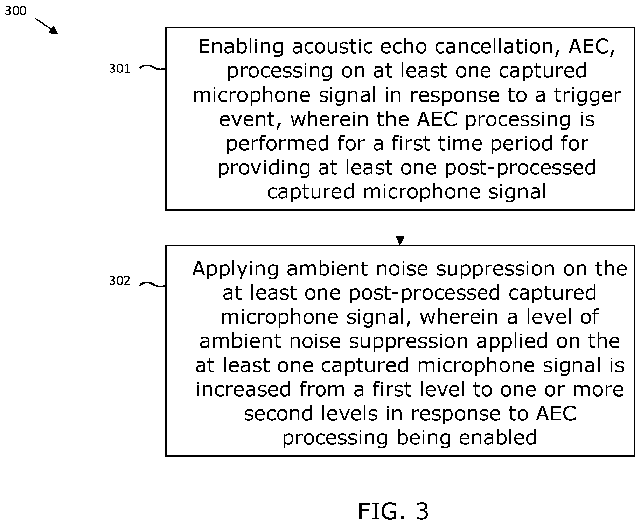

FIG. 3 is a flow diagram showing operations 300 according to one or more example embodiments. The operations 300 may be performed in hardware, software, firmware or a combination thereof. For example, the operations 300 may be performed individually, or collectively, by a means, wherein the means may comprise at least one processor and at least one memory storing instructions that, when executed by the at least one processor, cause the performance of the operations. The operations 300 may, for example, be performed by at least one of the first and second user devices 106, 108 described in relation to FIG 1.

A first operation 301 may comprise enabling acoustic echo cancellation, AEC, processing on at least one captured microphone signal in response to a trigger event, wherein the AEC processing is performed for a first time period for providing at least one post-processed captured microphone signal.

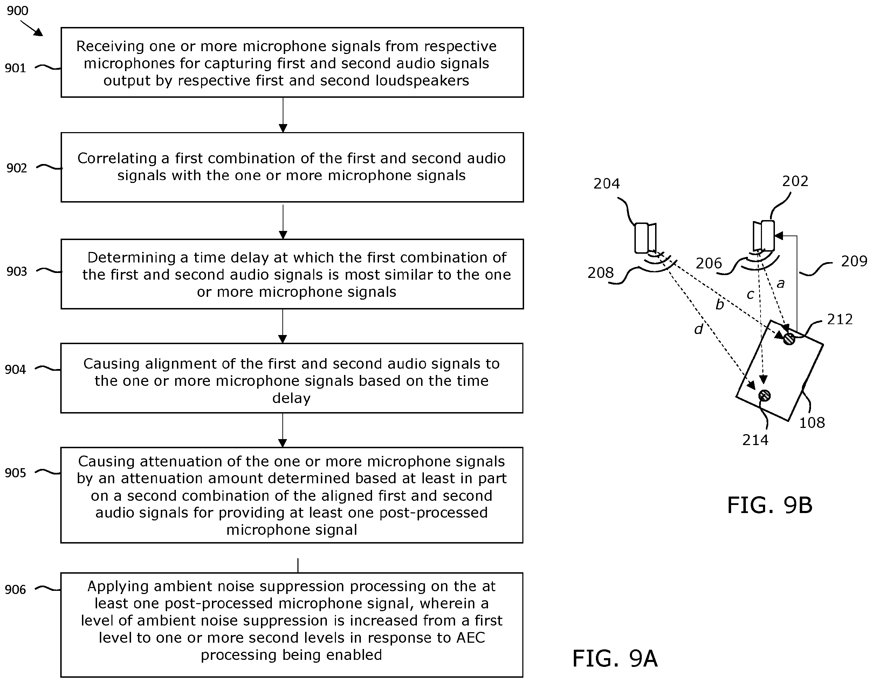

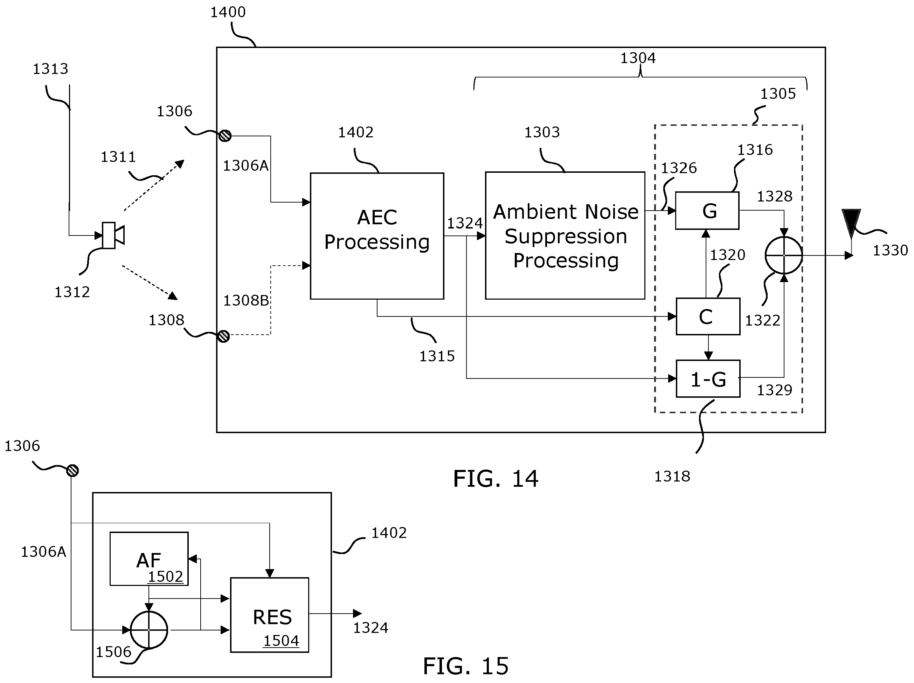

AEC processing may involve any conventional method for AEC processing. An example implementation is described later-on with reference to FIGs. 9 to 13 which aims to improve overall performance for the case where the near-end user operates an audio capture device comprising a plurality of microphones and a separate audio output device comprising a plurality of loudspeakers, wherein the distance between microphones and loudspeakers may change often and abruptly. However, it is to be understood that example embodiments are not limited to this example implementation and work well with other commonly-used AEC processing methods where the distance between one or more microphones and one or more loudspeakers is fixed and/or changes by only a limited amount, such as in the example of a flexible or foldable apparatus and/or a head-worn apparatus. FIGs. 14 and 15, also described below, illustrate another example implementation for such AEC processing methods.

A second operation 302 may comprise applying ambient noise suppression processing on the at least one post-processed captured microphone signal, wherein a level of ambient noise suppression applied on the at least one captured microphone signal is increased from a first level to one or more second levels in response to the AEC processing being enabled.

Ambient noise suppression processing may involve any conventional method for ambient noise suppression. References to one or more second levels clarifies that only one second level may be used, or a plurality of different second levels may be used which may be determined based on one or more parameters, such as based on whether the lowest frequency on which AEC processing is applied is below a predetermined threshold.

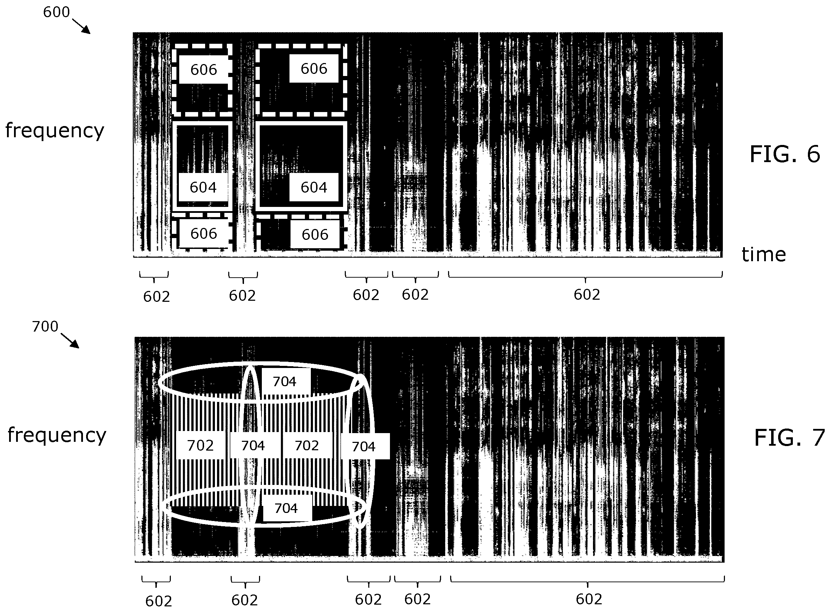

By applying ambient noise suppression in a controlled way, in response to AEC processing being enabled, it is seen that artefacts due to AEC processing are removed or at least mitigated. As will be explained below, for example with reference to spectrograms illustrated in FIGs. 6 to 8, applying ambient noise suppression effectively smooths time and frequency characteristics of the at least one captured microphone signal at portions where artefacts are present and/or most perceivable.

In some example embodiments, the at least one captured microphone signal represents, at least in part, speech audio, mainly from a near-end user but potentially also from a far-end user as explained above, and also ambient noise which is other than speech audio produced by a source farther away than the near-end user.

In some example embodiments, the AEC processing of the first operation 301 may cancel or remove substantially all far-end audio, for example both speech and ambient audio output by an audio output device associated with the at least one microphone, such as a set of headphones or similar; in comparison, the ambient noise suppression processing of the second operation 302 may suppress or remove both near and far -end ambient audio.

An apparatus configured to perform the first and second operations 301, 302 (or any related operations as described herein) may comprise any electronic device that may produce or receive the at least one microphone signal. For example, the apparatus may comprise at least one microphone for capturing the at least one microphone signal or the at least one microphone signal may be received by the apparatus from an external device which comprises one or more microphones. The apparatus may also comprise one or more loudspeakers for outputting far-end audio or, alternatively, the apparatus may be associated with an external device which comprises one or more loudspeakers for outputting far-end audio. For example, the external device may comprise a set of headphones or similar, wherein the external device communicates with the apparatus via a wired or wireless (e.g., Bluetooth or similar) link. The apparatus may be comprised in a user device, such as a smartphone or similar, examples of which are mentioned above.

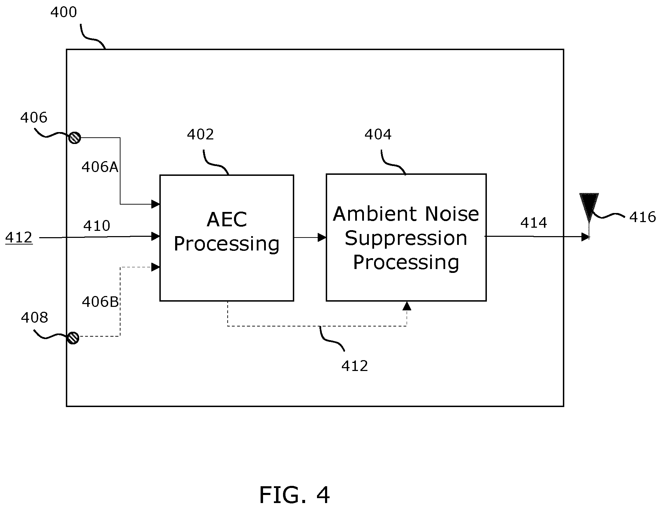

FIG. 4 illustrates a block diagram of an apparatus 400 according to some example embodiments. For example, the apparatus 400 may comprise a user device, examples of which are mentioned above.

The apparatus 400 may comprise an AEC processing module 402 and an ambient noise suppression module 404, which modules may be separate modules as shown or, in other example embodiments, may comprise a single module implementing both processing functions. The apparatus 400 may also comprise at least one microphone 406, 406 for capturing audio signal(s) and for producing at least one respective captured microphone signal 406A, 406B which is or are provided as input to the AEC processing module 402. The AEC processing module 402 may further receive as input one or more audio signals 410 that have been, or are being, output by one or more loudspeakers of an audio output device 412 associated with the apparatus 400.

The AEC processing module 402, or another processing module (not shown) may be configured to detect a trigger event, particularly the presence of one or more echo components in the at least one captured microphone signal 406A, 406B, in accordance with known methods. The AEC processing module 402 may become enabled in response to detecting the trigger event and performs AEC processing for a first time period. The first time period may be a finite time period, for example a time period over which the echo continues to be detected.

The AEC processing module 402 may produce a post-processed version of the at least one captured microphone signal 406A, 406B which is or are provided as input to the ambient noise suppression module 404 for further processing.

The ambient noise suppression module 404 may apply ambient noise suppression processing on the received post-processed version of the at least one captured microphone signal 406A, 406B.

The level of ambient noise suppression applied is increased from a first level, to one or more second levels, in response to the AEC processing module 402, or alternatively its actual AEC processing, being enabled. The ambient noise suppression module 404 may receive a control signal from the AEC processing module 402 for indicating said enablement or, in other example embodiments, the, or a different control signal may be received from another module such as a control module (not shown).

In some example embodiments, applying the ambient noise suppression processing is disabled prior to the AEC processing being enabled and is enabled in response to the AEC processing being enabled. In this case, the first level may be zero (no ambient noise suppression is applied) and the one or more second levels comprise one or more non-zero levels of ambient noise suppression.

In other example embodiments, the ambient noise suppression processing may already be enabled prior to the AEC processing being enabled. In this case, the first level may be non-zero (a relatively low level of ambient noise suppression already being applied) and the one or more second levels may comprise one or more relatively higher levels of suppression.

The one or more second levels may comprise only one second level or a plurality of second levels.

A signal 414 produced by the ambient noise suppression module 404 may be provided, for example transmitted via an antenna 416, as an uplink signal for a far-end user such as the first user 102 in FIG. 1. The far-end user may receive the uplink signal via a user device, for example the first user device 106 of FIG. 1, and the audio corresponding to the uplink signal is output via the first audio output device 110.

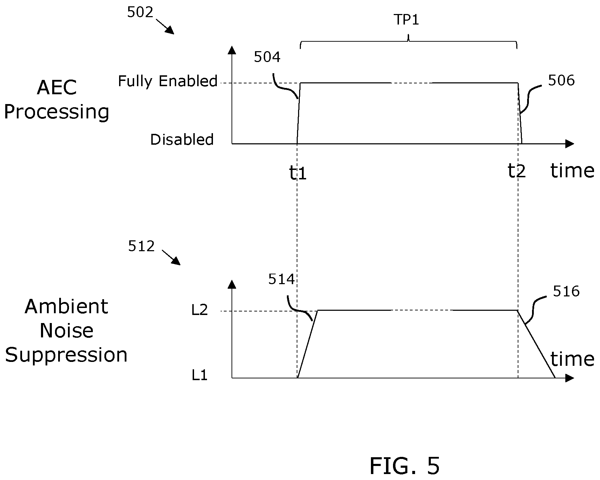

FIG. 5 illustrates first and second timing diagrams 502, 512 respectively associated with AEC processing and ambient noise suppression processing, as may be performed by the AEC processing module 402 and ambient noise suppression processing module 404 respectively.

Referring to the first timing diagram 502, at a first time instance, t1, a trigger event may be detected, for example the presence of an echo in the at least one captured microphone signal 406A, 406B.

AEC processing may responsively be enabled, for example by enabling the AEC processing module 402 from a disabled state. A finite period of time may be required for full AEC processing (i.e., full echo suppression) to take effect, as indicated by reference numeral 504 which indicates a rate at which the level of echo suppression is increased. This may be a relatively abrupt transition and may be in the order of tens of milliseconds.

The AEC processing is maintained for a first time period, TP1, until such time instance, t2, when it may be determined that AEC processing is no longer required, for example responsive to detecting that no echo is present in the at least one captured microphone signal 406A, 406B.

Similar to the above, a finite time period may be required for AEC processing (i.e., echo suppression) to become fully disabled or reduced to a minimal level, as indicated by reference numeral 506, which indicates a rate at which the AEC processing is decreased. This may be a relatively abrupt transition and may be in the order of tens of milliseconds.

Note that the level of AEC suppression is shown constant over the first time period, TP1, but this is not necessarily the case in all examples.

Referring to the second timing diagram 512, at or shortly after the first time instance, t1, and responsive to the AEC processing being enabled, ambient noise suppression may be applied, wherein the level of ambient noise suppression is increased from a first level, L1, to a second level, L2.

In the shown example, the ambient noise suppression module 404 may be disabled prior to it being increased to the second level, L2. In other example embodiments, the ambient noise suppression module 404 may already be enabled and applying a relatively low level of ambient noise suppression that is subsequently increased to the second level, L2, at or after the start of the first time period, t1.

In some example embodiments, the level of ambient noise suppression is increased gradually at a rate, indicated by reference numeral 514, which is less than the rate 504 at which the AEC processing is applied on the at least one captured microphone signal 406A, 406B. For example, the rate 514 at which the level of ambient noise suppression is increased may be in the order of seconds compared with the rate 504 at which the AEC processing is increased, which may in the order of milliseconds.

In some example embodiments, the level of ambient noise suppression may be maintained at the second level, L2, until at least the end of the first time period, TP1. The level of ambient noise suppression may then be decreased towards the first level, L1, i.e., to the first level, L1 or to another reduced level.

In some example embodiments, the level of ambient noise suppression is decreased gradually at a rate, indicated by reference numeral 516, which is less than the rate 506 at which the AEC processing is decreased on the at least one captured microphone signal 406A, 406B at the end of the first time period, TP1. For example, the rate 516 at which the level of ambient noise suppression is decreased may be in the order of seconds compared with the rate 506 at which the AEC processing is decreased which may be in the order of milliseconds.

Advantages associated with such gradual changes are mentioned below with reference to FIGs. 6 to 8.

In some example embodiments, the ambient noise suppression processing may be performed on all or an arbitrarily wide frequency range or on one or more limited frequency ranges which may be dependent on the AEC processing frequency range. For example, AEC processing may be applied on a first frequency range of the at least one captured microphone signal 406A, 406B, and the noise suppression processing may be applied to a second frequency range of the at least one captured microphone signal, wherein the second frequency range is determined based on the first frequency range. For example, the second frequency range may be substantially the same as the first frequency range, or the second range may be a limited frequency range that is wider than, and includes, the first frequency range. For example, the first frequency range may be 1.5 kHz - 3.5 kHz and the second frequency range may be 1 kHz - 4 kHz. Limiting the frequency range may require less processing resources/energy and less ambient audio will be suppressed providing a more natural user experience.

As may be appreciated, audibility of artefacts may be perceived more at lower frequencies because ambient noise is typically louder at lower frequencies. In some example embodiments, therefore, the level of the ambient noise suppression processing may be based, at least in part, on a lowest frequency of the at least one captured microphone signal 406A, 406B which comprises an echo component is (i.e., that lowest frequency requiring AEC processing) relative to a predetermined threshold, for example a relatively low frequency threshold.

For example, another operation may comprise determining the lowest frequency of the at least one captured microphone signal 406A, 406B which comprises an echo component and determining if said lowest frequency is at or below the predetermined threshold. In one example, only if said lowest frequency is at or below the predetermined threshold is the level of ambient noise suppression increased from the first level to the one or more second levels in accordance with the second operation 302. In another example, the one or more second levels are set higher, or are increased, if said lowest frequency is at or below the predetermined threshold than for the case that said lowest frequency is above the predetermined threshold. For example, the one or more second levels may increase as said lowest frequency decreases. In this way, more ambient noise suppression is applied if lower frequency signals require echo cancellation, thereby counteracting the more perceivable artefacts.

FIGs. 6 to 8 illustrate respective first, second and third spectrograms 600, 700, 800 which are useful for understanding advantages of the example embodiments.

Referring to FIG. 6, the first spectrogram 600 represents time and frequency characteristics of the at least one captured microphone signal 406A, 406B. Different portions 602, 604, 606 of the first spectrogram 600 indicate respective types of captured audio. For example, first portions 602 may represent near-end speech, second portions 604 may represent far-end speech echo components and third portions 606 may represent ambient noise. The ambient noise may, for example, represent audio of a music concert.

Referring to FIG. 7, the second spectrogram 700 represents time and frequency characteristics of the at least one captured microphone signal 406A, 406B, subsequent to AEC processing, wherein AEC processing is associated with the first portions 604 and is indicated graphically by reference numeral 702. For reasons already explained, adaptive filter limitations require over-eager AEC processing which therefore the AEC processing covers a wider frequency range that the second portions 604 and uses relatively strong levels of echo cancellation. This results in relatively abrupt changes at boundary portions 704 between said AEC processing portions 702 and the ambient noise portions 606 indicated in FIG. 6. These abrupt changes result in audible and transient artefacts which will be perceivable to the far-end user, in part because ambient noise is typically non-transient, and abrupt changes are easily perceived. The effect is further exacerbated if ambient noise is present between sequential instances of AEC processing because ambient noise levels will noticeably fluctuate.

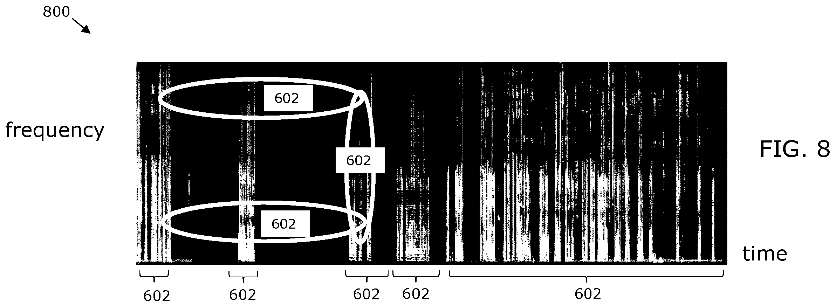

Referring to FIG. 8, the third spectrogram 800 represents time and frequency characteristics of the at least one captured microphone signal 406A, 406B, subsequent to AEC processing and after increasing the level of applied ambient noise suppression processing from the first level, L1, to one or more second levels L2, in accordance with example embodiments. It will be seen that the effect is to smooth the aforementioned abrupt changes in least some of the boundary portions 704 of FIG. 6 and thereby avoiding or mitigating the audible artefacts.

The above-described examples whereby ambient noise suppression processing is increased and/or decreased gradually, for example at a slower rate than the rate at which the AEC processing is increased and/or decreased, further assist in making the transitions less noticeable as the effects are gradually (not abruptly) introduced and reduced.

FIGs. 6 to 8 assume that ambient noise suppression processing is applied to a relatively wide frequency range (for example all audio frequencies) of the at least one microphone signal 406A, 406B. As also explained above, ambient noise suppression processing may be limited to a smaller frequency range which may be the same frequency range to which AEC processing is applied, or one which is wider than, and includes, the AEC processing frequency range (but does not cover all audio frequencies).

AEC Processing Implementation Example

An example implementation of the AEC processing module 402 is now described, particularly suited to the case where a near-end user operates an audio capture device comprising a plurality of microphones and a separate audio output device comprising a plurality of loudspeakers.

FIG. 9A is a flow diagram showing operations 900 according to the implementation example. The operations 900 may be performed in hardware, software, firmware or a combination thereof. For example, the operations 900 may be performed individually, or collectively, by a means, wherein the means may comprise at least one processor and at least one memory storing instructions that, when executed by the at least one processor, cause the performance of the operations.

A first operation 901 may comprise receiving one or more microphone signals from respective microphones for capturing first and second audio signals output by respective first and second loudspeakers. A second operation 902 may comprise correlating a first combination of the first and second audio signals with the one or more microphone signals. A third operation 903 may comprise determining a time delay at which the first combination of the first and second audio signals is most similar to one of the one or more microphone signals. A fourth operation 904 may comprise causing alignment of the first and second audio signals to the one or more microphone signals based on the time delay. A fifth operation 905 may comprise causing attenuation of the one or more microphone signals by an attenuation amount determined based at least in part on a second combination of the aligned first and second audio signals for providing at least one post-processed microphone signal. The first to fifth operations 905 may correspond to the first operation 301 of FIG. 3, i.e., enabling AEC processing. A sixth operation 906 may comprise applying ambient noise suppression processing on the at least one post-processed microphone signal, wherein a level of ambient noise suppression is increased from a first level to one or more second levels in response to the AEC processing being enabled. It is to be noted also that above and below references to first and second combinations for aligning the of the first and second audio signals is given as an example and is not to be considered limiting. Other methods for aligning the first and second audio signals may be used in other example embodiments.

In some examples, the first combination of the first and second audio signals (hereafter "first combination") may comprise a weighted sum of the first and second audio signals, e.g.:

$$Y = w1 \ (\text{first audio signal}) + w2 \ (\text{second audio signal}),$$

where *w1, w2* are respective weights that may sum to one.

For example, the first combination may comprise one of the following (non-exhaustive) list of audio signal combinations, y, where the italic values represent respective weights:

**Table 1** - **example set of audio signals**

*0.0* (first audio signal) + *1.0* (second audio signal);

*0.1* (first audio signal) + *0.9* (second audio signal);

*0.2* (first audio signal) + *0.8* (second audio signal);

*0.5* (first audio signal) + *0.5* (second audio signal);

*0.8* (first audio signal) + *0.2* (second audio signal);

*0.9* (first audio signal) + *0.1* (second audio signal); and

*1.0* (first audio signal) + *0.0* (second audio signal).

It will be seen that the first and last items of the table 1 list indicate that the first combination Y comprises, respectively, only the second audio signal and only the first audio signal. The other items indicate respective in-between weightings that combine some amount of both of the first and second audio signals. In some examples, one of the first and second audio signals of the first combination has a smaller gain than the aligned first and second audio signals of the second combination. In some examples, the correlating may comprise performing cross-correlation or a similar similarity function to determine a maximum similarity value. In some examples, the first combination may be determined by correlating each of the one or more microphone signals, x, with each audio signal combination, y, the first combination being determined as the audio signal combination which is most similar to at least one of the one or more microphone signals. Put another way, the first combination is that pairing of audio signal combination, y, to microphone signal, x, which produces the highest maximum similarity or correlation value.

For example, correlation may be performed for each of the following pairs (x, y) of microphone signal, x, and audio signal combination, y,:

**Table 2** - **example correlations**

| | |
|---|---|
| x = first microphone signal, | y = first audio signal only; |
| x = second microphone signal, | y = first audio signal only; |
| x = first microphone signal, | y = second audio signal only; |
| x = second microphone signal, | y = second audio signal only; |
| x = first microphone signal, | y = first + second audio signal; and |
| x = second microphone signal, | y = first + second audio signal. |

The first four items of table 2 indicate correlations using, for y, only one of the first and second audio signals, as per the first and seventh items of table 1. The fifth and sixth items of table 2 indicate correlations using, for *y*, a particular sum of the first and second audio signals, as per the second to sixth items of table 1.

Having determined the first combination, the time delay may be determined based on an amount of time shift of the first combination relative to the microphone signal, *x*, that produced the highest maximum similarity value. The time delay is that referred to in the third operation 303.

FIG. 9B illustrates the FIG. 2 left and right -hand loudspeakers 202, 204 in relation to the first and second microphones 212, 214 during output of the first and second audio signals 206, 208.

The first microphone 212 may capture (at least some energy of) the first audio signal 206 and/or the second audio signal 208, indicated by respective first and second paths *a, b*. The first microphone 212 produces a first microphone signal which may include the captured first and/or second audio signals 206, 208. The second microphone 214 may capture (at least some energy of) the first audio signal 206 and/or the second audio signal 208, indicated by respective third and fourth paths *c*, *d*. The second microphone 214 produces a second microphone signal which may include the captured first and/or second audio signals 206, 208. In some cases, the first microphone 212 and/or the second microphone 214 may capture no energy of the first audio signal 206 or the second audio signal 208.

Acoustic echo may result if the first and/or second microphones 212, 214 "hear" the first and/or second audio signals 206, 208 which may be the case if some proportion of said signal(s) reaches said microphone(s) at a level above those of other sound sources, or up to 10 dB below the level of other sound sources, or otherwise above a level of internal noise or ambient noise associated with said microphones The length of paths a - d may differ greatly and may change abruptly and frequently depending on how the second user 104 positions and/or orients the second user device 108. For example, the first path *a* is clearly shorter than the fourth path d which means that the first microphone 212 will likely capture (or hear) more energy of the first audio signal 206 than the second audio signal 208. Echo effects are unlikely to be particularly strong (because, in the case of earphones devices at least, there is typically a low amount of audio leakage outside of the user's ears), and hence attenuation in accordance with the fifth operation 305 may only be required when the left and right -hand loudspeakers 202, 204 are relatively close (e.g., 1 metre or less) to the second user device 108, and possibly when there are no significant sound sources in the vicinity of the user device. This closeness can be identified based on there being a high correlation or similarity between the first combination and at least one of the first and second microphone signals.

In accordance with the second operation 902, from FIG. 9 it may be expected that the pair (x, y) of signals:

$$x = \text{first microphone signal}, \qquad y = \text{first audio signal},$$

will have the highest maximum similarity value.

In other words, the final item in table 1 may be determined as the first combination (y = *1.0* (first audio signal) + *0.0* (second audio signal)).

The time delay may comprise the amount of time shift of the first audio signal 206 relative to the first microphone signal because it will produce the highest maximum similarity value.

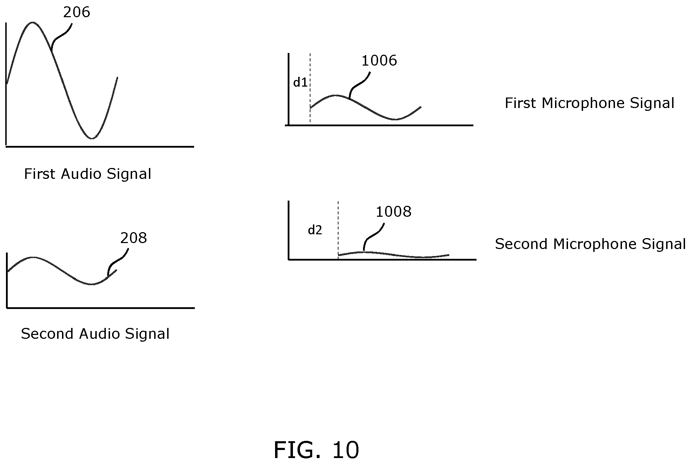

FIG. 10 shows example time domain waveforms for the first and second audio signals 206, 208 and first and second microphone signals 1006, 1008. It will be seen that the first microphone signal 1006 is an attenuated version of the first audio signal 206 with a certain time delay, *d1*, and the second microphone signal 1008 is a more attenuated version of the first audio signal with a certain time delay, *d2,* where $d2 > d1$.

In this example, neither the first or second microphones 1006, 1008 captures, or hears, the second audio signal 208 although in other examples the situation may be different.

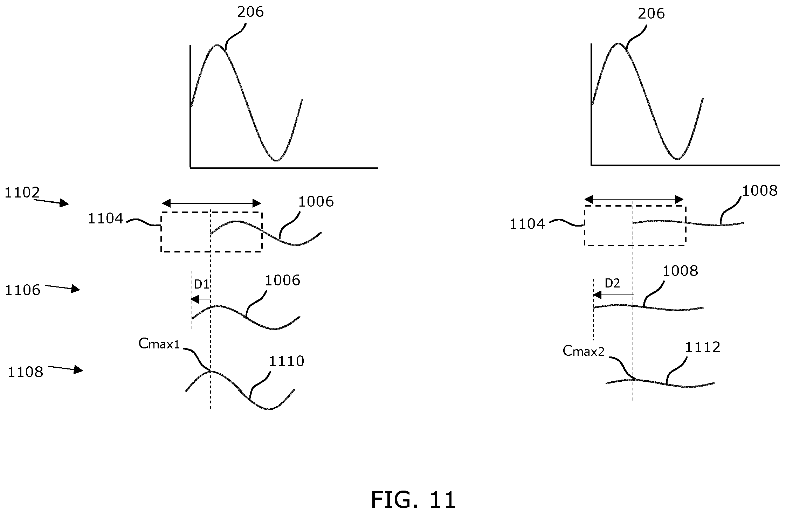

FIG. 11 illustrates how cross-correlation may be performed in the time domain for, by way of example, only two pairs (x, y) of signals namely:

$$x = \text{first microphone signal}, \qquad y = \text{first audio signal; and}$$
$$x = \text{second microphone signal}, \qquad y = \text{first audio signal}.$$

Reference numeral 1102 indicates graphically how cross-correlation may be performed using a time window 1104. The length of the time window 1104 may be set, and therefore limited, based on an estimated time delay for data representing the first and second audio signals 206, 208 to arrive at the first and second microphones 206, 208. The time delay used for the time window 1104 may, for example, comprise 3 ms (the approximate time it takes sound to travel 1 meter). This is because it may be assumed that the first and second microphones 212, 214 will not capture or hear the first and second audio signals 206, 208 if said microphones are more than 1 meter from the left and right -hand loudspeakers 202, 204. Additionally, there may be further delays due to the wireless channel (e.g., the Bluetooth channel 209) between the second user terminal 108 and the second audio output device 112 and also delays due to processing and/or buffering performed at the second audio output device. These delays may be longer than the above 3 ms delay which may be ignored in some cases. Assuming a worst case scenario, the time delay used for the time window 1104 may be up to 400 ms. The time delay may typically be expected around 100 - 200 ms.

Reference numeral 1106 indicates graphically respective first and second time delays, *D1*, *D2,* when the maximum similarity (cross-correlation) is measured.

Reference numeral 1108 indicates graphically approximate similarity or cross-correlation values, *C*, 1110, 1112 which may vary in value between 0 and 1, and the locations of respective maximum similarity (cross-correlation) values *Cmax1, Cmax2.*

In this simple example, therefore, the pair (x, y) of signals comprising:

x = first microphone signal 1006,          y = first audio signal 206,

produces the highest maximum similarity/correlation value, because *Cmax1 > Cmax2.*

Hence the first combination will indeed comprise the final item in table 1:
1.0 (first audio signal) + 0.0 (second audio signal).

The time delay for the purposes of the third operation 903 may comprise at least the first time delay, *D1.*

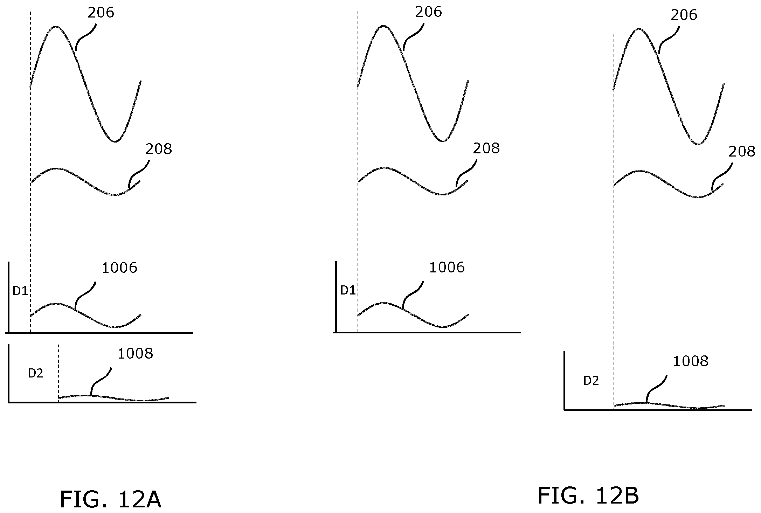

Referring to FIG. 12A, the first and second audio signals 206, 208 may be aligned with the first and second microphone signals 1006, 1008 based on the time delay, *D1.*

The first and second microphone signals 1006, 1008 may be attenuated by an attenuation amount A which is determined based at least in part on the second combination of the aligned first and second audio signals 206, 208.

The first and second audio signals 206, 208 may combine in unexpected ways during travel to the first and second microphones 212, 214, for example, due to characteristics of the user's head, the room in which the user is located and/or characteristics of the audio output device, which may cause reflections and dampening. The safest option may therefore be to individually attenuate all (in this case the first and second) microphone signals 1006, 1008, or at least those microphone signals where at least in one pairing the similarity value was above a threshold.

For the same reason, the attenuation amount A may be based on a worst-case combination of the first and second audio signals 206, 208, e.g., based on summing the aligned first and second audio signals 206, 208.

The second combination may therefore comprise a sum of the aligned first and second audio signals 206, 208 and the attenuation amount may be based at least in part on this sum.

In some examples, the sum of the aligned first and second audio signals 206, 208 may be a weighted sum, e.g.,:

$$Y = w3 \text{ (first audio signal)} + w4 \text{ (second audio signal)},$$

where *w3, w4* are respective weights that may sum to one.

In some examples, the respective weights *w3, w4* may both comprise 0.5. In this case, the second audio signal 208 will have a smaller gain in the first combination than in the second combination.

In some examples, the respective weights *w3, w4* may be in the range of 0.3 to 0.7 so that their sum is 1.0.

In some examples, in the first combination at least one of the weights *w3, w4* for one of the audio signals 206, 208 is smaller than the respective weight for the same audio signal in the second combination.

In some examples, in the first combination at least one of the weights *w3, w4* for one of the audio signals 206, 208 is larger than the respective weight for the same audio signal in the second combination.

In some examples, the respective weights *w3, w4* may be based on the amount of correlation between the one or more microphone signals 1006, 1008 and the first combination. In some examples, the greater the correlation the greater the attenuation.

In some examples, because the time delay, *D1,* is an estimate, the attenuation may be performed using relatively long time windows and/or smoothed envelopes instead of following the shape of the first and second audio signals 206, 208 quickly and accurately.

In some examples, the correlation values, *C,* are smoothed over time using previous correlation estimates.

In some examples, the attenuation amount A may have a maximum value of 5-20 dB.

In some examples, the attenuation amount A may be determined on a per sub-band basis, e.g., for each sub-band.

In some examples, the sub-bands may cover a frequency range of 1 - 5 KHz.

Referring to FIG. 12B, in an alternative example, the first and second audio signals 206, 208 may be aligned with the first and second microphone signals 1006, 1008 based on the respective first and second time delays, *D1, D2.* For example, the first and second audio signals 206, 208 may be aligned with the first microphone signal 1006 based on the first time delay, *D1,* and the first and second audio signals may be aligned with the second microphone signal 1008 based on the second time delay, *D2.* The respective weights *w3, w4* used for the first and second microphone signals 1006, 1008 may be based on the respective correlation highest similarity (correlation) values, i.e., based on *Cmax1* for the first microphone signal 506 and Cmax2 for the second microphone signal.

In some examples, at least the attenuating of the first and second microphone signals 1006, 1008 may be performed in the frequency domain and the attenuated first and second microphone signals may thereafter be converted to the time domain for output.

In some examples, the second to fifth operations 902 to 905 may be performed in the frequency domain as will now be described with a general example for determining the attenuation amount A.

In summary, microphone signals, x, and audio signals, y, may be framed, windowed (for example with a window 20 ms long and 50% overlapping) and converted into the frequency domain using, for example, a Fast Fourier Transform, FFT. Other transforms and/or filter banks may also be used.

The signals x and y may be divided into frequency sub-bands (for example, third octave, Bark and/or the like).

The signals $X_{i,j,k}$ and $Y_{i,j,k}$ may be derived where, i is a frame index, j is a subband index and k is a bin number in a given sub-band.

The correlation value C between the signals x and y may be computed as:

$$C(i,j) = \left\{ \frac{\sum_k X_{i,j,k} \cdot Y_{i,j,k}^*}{\sqrt{\sum_k X_{i,j,k}^2 \cdot \sum_k Y_{i,j,k}^2}} \right\} (1A)$$

Equation (1A) corresponds to a zero delay correlation. in some examples, correlation with different delays may be calculated taking different time frame *l* data to one of the signals x or y where the different time frame *l* data is delayed compared to time frame i. For example:

$$C(i,j,l) = \left\{ \frac{\sum_k X_{l,j,k} \cdot Y_{i,j,k}^*}{\sqrt{\sum_k X_{l,j,k}^2 \cdot \sum_k Y_{i,j,k}^2}} \right\} \qquad (1B)$$

Differently delayed (0..400ms) time frames are tested to find the delay that gives the highest correlation.

The correlation value C for the pair of signals (x, y) that produces the highest maximum similarity/correlation value may be used.

In accordance with the third and fourth operations 903, 904 the first and second audio signals may be aligned to the first and second microphone signals using the time delay that produced the highest maximum similarity value.

The aligned first and second audio signals may be combined to create a worst-case safety energy calculation. For example, the aligned first and second audio signals energies may be summed for each frame and frequency band, as:

$$S(i,j) = 10\log_{10}\left(\sum_k L_{l,j,k}^2 + \sum_k R_{l,j,k}^2\right) \qquad (2)$$

The signal energy of each microphone signal, x, may be determined as:

$$M_m(i,j) = 10\log_{10} \sum_k M_{m,i,j,k}^2 \,(3)$$

where m is the microphone index.

The correlation value, *C,* rarely reaches 0 or 1. Therefore, the correlation value *C* may be mapped to a more useful value using, for example, using a lookup table where the correlation value, C, is mapped to the attenuation amount, A, which may be a value between 0 and 20dB, e,g, 5dB, and is directly the maximum attenuation amount, $A_m(i,j)$, for each microphone time frame and frequency band.

The maximum attenuation is used if the microphone signal is sufficiently below the worst-case signal energy, for example if the difference is 35 dB or more. In some examples no attenuation is used otherwise.

In some examples used attenuation may be smaller that the maximum attenuation when then difference between the microphone signal energy and the worst case signal energy is not 35 dB. The value of 35 dB is merely an example value and other values may be used for example in a range from 20 to 50 dB.

The attenuation amount A may be applied to the microphone signals in the frequency domain and converted back to the time domain for applying ambient noise suppression as per operation 906 of FIG. 9.

In general overview, example embodiments may reduce the perception of echoes and also resulting artefacts by controlled application of ambient noise suppression. Example embodiments may be used in various use cases, including, but not limited to:

- voice call echo cancellation;
- recording of audio (and possibly video) via a user device whilst a user of the user device listens to other audio (e.g., music) via an earphones device, wherein the other audio should not be recorded via the user device; and
- capture of audio voice commands for speech recognition processing whilst the user listens to other audio via an earphones device, wherein the other audio should not disrupt speech recognition processing.

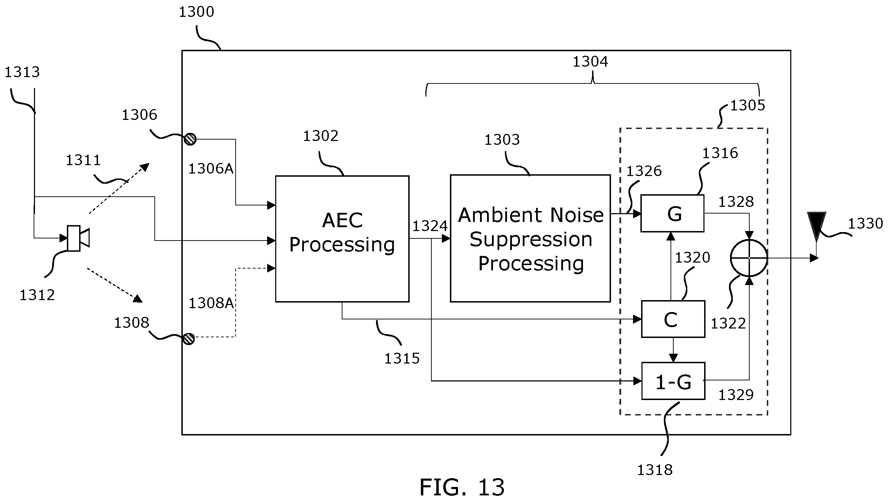

FIGs. 13 - 15 illustrate alternative or refined examples of the FIG. 4 apparatus which are in accordance with some example embodiments.

FIG. 13 illustrates a block diagram of an apparatus 1300 for the case that the implementation example described above with reference to FIGs. 9 to 12 is used for the AEC processing.

The apparatus 1300 may comprise an AEC processing module 1302 based on said above implementation example and an ambient noise suppression system 1304. The ambient noise suppression system 1304 may comprise an ambient noise suppression module 1303 and a mixing module 1305. The apparatus 1300 may also comprise at least one microphone 1306, 1308 for capturing audio 1311 output by at least one loudspeaker 1312 (based on a received audio signal 1313) of an associated audio output device. The at least one microphone 1306, 1308 may provide at least one respective captured microphone signal 1306A, 1308A which is or are provided as input to the AEC processing module 1302. The AEC processing module 1302 may further receive as input the audio signal 1313 from the associated audio output device.

The AEC processing module 1302, or another processing module (not shown) may be configured to detect a trigger event, particularly the presence of one or more echo components in the at least one captured microphone signal 1306A, 1308A, in accordance with the implementation example. The AEC processing module 1302 may become enabled in response to detecting the trigger event and performs AEC processing for a first time period. The first time period may be a finite time period, for example a time period over which the echo continues to be detected.

The AEC processing module 1302 may produce a post-processed version 1324 of the at least one captured microphone signal 1306A, 1308A which is or are provided as input to the ambient noise suppression system 1304 for further processing.

The ambient noise suppression module 1303 may apply ambient noise suppression processing on the received post-processed version 1324 of the at least one captured microphone signal 1306A, 1308A for providing an ambient noise -reduced output signal 1326.

The level of ambient noise suppression may be controlled via the mixing module 1305. The mixing module 1305 may comprise a first gain module 1316, a second gain module 1318, a gain controller 1320 and a mixer 1322. The first gain module 1316 may receive the ambient noise -reduced output signal 1326 and apply a gain "G" based on a control signal from the gain controller 1320. The second gain module 1318 may receive the post-processed version 1324 of the at least one captured microphone signal 1306A, 1306B and apply a gain "1-G" based on a control signal 1315 from the gain controller 1320. Respective outputs 1328, 1329 from the first and second gain modules 1316, 1318 may be mixed by the mixer 1322 for providing an output signal to an antenna 1330.

The gain controller 1320 may receive the control signal 1315 from the AEC processing module 1302 for indicating if (and when) AEC processing is enabled and optionally the amount or level of AEC processing being applied to the at least one captured microphone signal 1306A, 1308A. At a time when the control signal 1315 indicates that AEC processing is enabled, or the level is being increased, the gain controller 1320 may control the value of G and therefore also the value of 1-G such that the contribution from the first gain module 1316 to the mixer 1322 is increased to the one or more second levels and the contribution from the second gain module 1318 to the mixer is correspondingly decreased. As described above, this may be performed gradually. For example, the gain controller 1320 may increase the value of G from zero (or other minimum value) to one (or other maximum value) at a rate of 0.01 per frame (e.g., per 20 ms frame). In the case that the control signal 1315 indicates that AEC processing is (or is to be) disabled or is being reduced, the gain controller 1320 may control the value of G and therefore the value of 1-G such that the contribution from the first gain module 1316 to the mixer 1322 is decreased towards the first level and the contribution from the second gain module 1318 to the mixer is correspondingly increased. As described above, this may be performed gradually. For example, the gain controller 1320 may decrease the value of G from one (or other maximum value) at a rate of 0.002 per frame (e.g., per 20 ms frame) to zero (or other minimum value). In this case, the value of G goes to zero in ten seconds. Other values of G can be used to achieve a similar effect of ambient noise suppression dropping to the minimum value over the course of seconds or (even minutes) and/or ramping-up the value of G at a faster rate of a few seconds or tenths of seconds. Indeed, any method whereby the level of ambient noise suppression changes slowly compared with the rate at which AEC processing changes to follow echo cancellation of the at least one captured microphone signal 1306A, 1308A. Instead of a mixing module 1305 being used, other methods may involve use of machine learning (NL) methods for determining the levels of ambient noise suppression.

For completeness, FIG. 14 illustrates a block diagram of an apparatus 1400 according to other example embodiments for the case that another form of AEC processing module 1402 (which is other than that described above with reference to FIGs. 9 to 12) is used for AEC processing. The apparatus 1400 comprises some same or similar components to the FIG. 13 apparatus 1300. Like elements are indicated with like reference numerals and may be assumed to operate in the same or similar way to the FIG. 13 apparatus 1300. FIG. 15 illustrates a block diagram of example functional modules of the conventional AEC processing module 1402. The conventional AEC processing module 1402 may comprise an adaptive filter module 1502, a residual echo suppression module 1504 and a mixer 1506, a detailed description of which is or are not considered necessary for understanding example embodiments described herein.

Example Apparatus

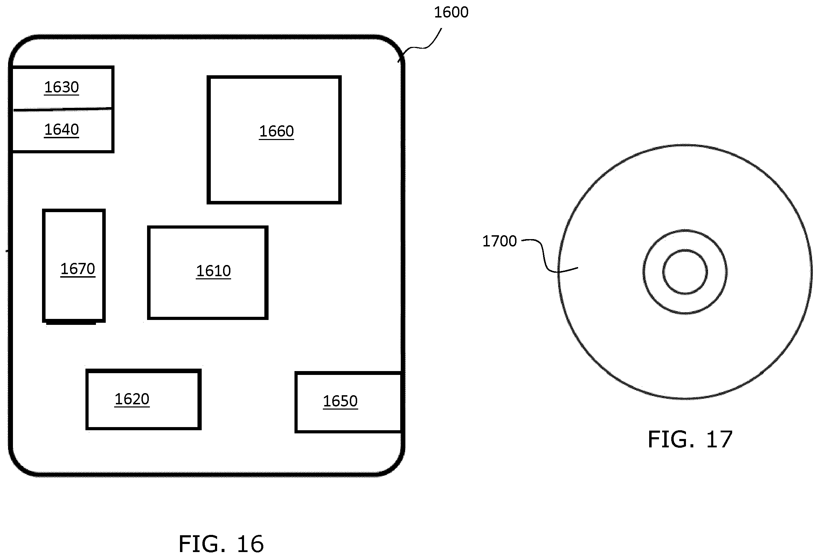

FIG. 16 illustrates an example device 1600 capable of supporting at least some embodiments. The device 1600 may comprise the apparatus 400, 1300 or 1400 illustrated in any of FIGs. 4, 13 or 14 for example, which may comprise at least part of a user device of any previous example. Comprised in device 1600 is a processor 1610, which may comprise, for example, a single- or multi-core processor wherein a single-core processor comprises one processing core and a multi-core processor comprises more than one processing core. The processor 1610 may comprise, in general, a control device. The processor 1610 may comprise more than one processor. The processor 1610 may be a control device. The processor 1610 may comprise at least one Application-Specific Integrated Circuit, ASIC. The processor 1610 may comprise at least one Field-Programmable Gate Array, FPGA. The processor 1610 may be means for performing method steps in device 1600. The processor 1610 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as the first or second user device 106, 108, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 1600 may comprise a memory 1620. The memory 1620 may comprise random access memory and/or permanent memory. The memory 1620 may comprise at least one RAM chip. The memory 1620 may comprise solid-state, magnetic, optical and/or holographic memory, for example. The memory 1620 may be at least in part accessible to processor 1610. The memory 1620 may be at least in part comprised in processor 1610. The memory 1620 may be means for storing information. The memory 1620 may comprise computer instructions that processor 1610 is configured to execute. When computer instructions configured to cause the processor 1610 to perform certain actions are stored in the memory 1620, and the device 1600 overall is configured to run under the direction of the processor 1610 using computer instructions from the memory 1620, the processor 1610 and/or its at least one processing core may be considered to be configured to perform said certain actions. The memory 1620 may be at least in part comprised in the processor 1610. The memory 1620 may be at least in part external to the device 1600 but accessible to the device 1600.

The device 1600 may comprise a transmitter 1630. The device 1600 may comprise a receiver 1640. The transmitter 1630 and the receiver 1640 may be configured to transmit and receive, respectively, information in accordance with at least one cellular or non-cellular standard.

The transmitter 1630 may comprise more than one transmitter. The receiver 1640 may comprise more than one receiver. The transmitter 1630 and/or the receiver 1640 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 1600 may comprise a Near-Field Communication, NFC, transceiver 1650. The NFC transceiver 1650 may support at least one NFC technology, such as NFC, Bluetooth, Wibree or similar technologies.

The device 1600 may comprise a User Interface, UI, 1660. The UI 1660 may comprise at least one of a display, a keyboard, a touchscreen, a vibrator arranged to signal to a user by causing device 1600 to vibrate, a speaker and a microphone. A user may be able to operate the device 1600 via the UI 1660, for example to accept incoming telephone calls, to originate telephone calls or video calls, to browse the Internet, to manage digital files stored in memory 1620 or on a cloud accessible via the transmitter 1630 and the receiver 1640, or via NFC transceiver 1650, and/or to play games.

The device 1600 may comprise or be arranged to accept a user identity module 1670. The user identity module 1670 may comprise, for example, a Subscriber Identity Module, SIM, card installable in device 1600. The user identity module 1670 may comprise information identifying a subscription of a user of device 1600. The user identity module 1670 may comprise cryptographic information usable to verify the identity of a user of device 1600 and/or to facilitate encryption of communicated information and billing of the user of the device 1600 for communication effected via device 1600.

The processor 1610 may be furnished with a transmitter arranged to output information from processor 1610, via electrical leads internal to the device 1600, to other devices comprised in the device 1600. Such a transmitter may comprise a serial bus transmitter arranged to, for example, output information via at least one electrical lead to the memory 1620 for storage therein. Alternatively to a serial bus, the transmitter may comprise a parallel bus transmitter.

Likewise, the processor 1610 may comprise a receiver arranged to receive information in The processor 1610, via electrical leads internal to the device 1600, from other devices comprised in the device 1600. Such a receiver may comprise a serial bus receiver arranged to, for example, receive information via at least one electrical lead from the receiver 1640 for processing in the processor 1610. Alternatively to a serial bus, the receiver may comprise a parallel bus receiver.

The device 1600 may comprise further devices not illustrated in Figure 16. For example, where the device 1600 comprises a smartphone, it may comprise at least one digital camera. Some devices 1600 may comprise a back-facing camera and a front-facing camera, wherein the back-facing camera may be intended for digital photography and the front-facing camera for video telephony. The device 1600 may comprise a fingerprint sensor arranged to authenticate, at least in part, a user of the device 1600. In some embodiments, the device 1600 lacks at least one device described above. For example, some devices 1600 may lack a NFC transceiver 1650 and/or user identity module 1670.

The processor 1610, memory 1620, transmitter 1630, receiver 1640, NFC transceiver 1650, UI 1660 and/or user identity module 1670 may be interconnected by electrical leads internal to the device 1600 in a multitude of different ways. For example, each of the aforementioned devices may be separately connected to a master bus internal to the device 1600, to allow for the devices to exchange information. However, as the skilled person will appreciate, this is only one example and depending on the embodiment various ways of interconnecting at least two of the aforementioned devices may be selected without departing from the scope of the present invention.

Figure 17 shows a non-transitory media 1700 according to some embodiments. The non-transitory media 1700 is a computer readable storage medium. It may be e.g. a CD, a DVD, a USB stick, a blue ray disk, etc. The non-transitory media 1700 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

**Claims**

1. An apparatus comprising:

   means for enabling acoustic echo cancellation, AEC, processing on at least one captured microphone signal in response to a trigger event, wherein the AEC processing is performed for a first time period for providing at least one post-processed captured microphone signal; and
   means for applying ambient noise suppression processing on the at least one post-processed captured microphone signal, wherein a level of ambient noise suppression applied on the at least one post-processed captured microphone signal is increased from a first level to one or more second levels in response to the AEC processing being enabled.

2. The apparatus of claim 1, wherein

   the means for applying the ambient noise suppression processing is disabled prior to the AEC processing being enabled and is enabled in response to the AEC processing being enabled, or
   the means for applying the ambient noise suppression processing is enabled prior to the AEC processing being enabled.

3. The apparatus of any preceding claim, wherein
the level of ambient noise suppression is increased from a start of the first time period.

4. The apparatus of any preceding claim, wherein
the level of ambient noise suppression is increased gradually at a rate which is less than a rate at which the AEC processing is applied on the at least one captured microphone signal.

5. The apparatus of claim 4, wherein
the rate at which the level of ambient noise suppression is increased is in the order of seconds and the rate at which the AEC processing is increased is in the order of milliseconds.

6. The apparatus of any preceding claim, wherein
the level of ambient noise suppression is maintained at the one or more second levels until at least an end of the first time period and is then decreased towards the first level.

7. The apparatus of claim 6, wherein
the level of ambient noise suppression is decreased gradually at a rate which is less than a rate at which the AEC processing is decreased on the at least one captured microphone signal at the end of the first time period.

8. The apparatus of claim 7, wherein
the rate at which the level of ambient noise suppression is decreased is in the order of seconds and the rate at which the AEC processing is decreased is in the order of milliseconds.

9. The apparatus of any preceding claim, wherein

the AEC processing is applied to a first frequency range of the at least one captured microphone signal, and the noise suppression processing is applied to a second frequency range of the at least one post-processed captured microphone signal, wherein the second frequency range is determined based on the first frequency range.

10. The apparatus of claim 9, wherein

the second frequency range is substantially the same as the first frequency range, or
the second frequency range is wider than, and includes, the first frequency range.

11. The apparatus of any preceding claim, wherein
the level of the ambient noise suppression processing is based, at least in part, on a lowest frequency of the at least one captured microphone signal relative to a predetermined threshold.

12. The apparatus of claim 11, wherein
the level of the ambient noise suppression is increased from the first level to the one or more second levels only if the lowest frequency of the at least one captured microphone signal is at or below the predetermined threshold.

13. The apparatus of claim 11, wherein
in the case that the lowest frequency of the at least one captured microphone signal is at or below the predetermined threshold, the one or more second levels are higher than for the case that the lowest frequency of the at least one captured microphone signal is above the predetermined threshold.

14. A computer program comprising instructions which, when executed by an apparatus, cause the apparatus to perform at least the following:

enabling acoustic echo cancellation, AEC, processing on at least one captured microphone signal in response to a trigger event, wherein the AEC processing is performed for a first time period for providing at least one post-processed captured microphone signal; and
applying ambient noise suppression processing on the at least one post-processed captured microphone signal, wherein a level of ambient noise suppression applied on the at least one post-processed captured microphone signal is increased from a first level to one or more second levels in response to the AEC processing being enabled.

15. A method, comprising:

enabling acoustic echo cancellation, AEC, processing on at least one captured microphone signal in response to a trigger event, wherein the AEC processing is performed for a first time period for providing at least one post-processed captured microphone signal; and

applying ambient noise suppression processing on the at least one post-processed captured microphone signal, wherein a level of ambient noise suppression applied on the at least one post-processed captured microphone signal is increased from a first level to one or more second levels in response to the AEC processing being enabled.

FIG. 1

FIG. 2

300

301 —

Enabling acoustic echo cancellation, AEC, processing on at least one captured microphone signal in response to a trigger event, wherein the AEC processing is performed for a first time period for providing at least one post-processed captured microphone signal

302 —

Applying ambient noise suppression on the at least one post-processed captured microphone signal, wherein a level of ambient noise suppression applied on the at least one captured microphone signal is increased from a first level to one or more second levels in response to AEC processing being enabled

FIG. 3

FIG. 4

502 →

TP1

AEC
Processing

504

Fully Enabled

506

Disabled

t1                                    t2    time

512 →

Ambient
Noise
Suppression

514

L2

516

L1                                          time
                        t1                  t2

FIG. 5

FIG. 6

FIG. 7

FIG. 8

900

901 — Receiving one or more microphone signals from respective microphones for capturing first and second audio signals output by respective first and second loudspeakers

902 — Correlating a first combination of the first and second audio signals with the one or more microphone signals

903 — Determining a time delay at which the first combination of the first and second audio signals is most similar to the one or more microphone signals

904 — Causing alignment of the first and second audio signals to the one or more microphone signals based on the time delay

905 — Causing attenuation of the one or more microphone signals by an attenuation amount determined based at least in part on a second combination of the aligned first and second audio signals for providing at least one post-processed microphone signal

906 — Applying ambient noise suppression processing on the at least one post-processed microphone signal, wherein a level of ambient noise suppression is increased from a first level to one or more second levels in response to AEC processing being enabled

FIG. 9A

FIG. 9B

FIG. 10

FIG. 11

FIG. 12A

FIG. 12B

FIG. 13

FIG. 14

FIG. 15

EP 4 708 837 A1

1600

1630

1640

1660

1670

1610

1620

1650

FIG. 16

1700

FIG. 17

Europäisches
Patentamt

European
Patent Office

Office européen
des brevets

# EUROPEAN SEARCH REPORT

**Application Number**

EP 25 19 6135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 798 912 A2 (AT & T CORP [US]) 1 October 1997 (1997-10-01) * column 2, line 15 - line 32 * * column 4, line 1 - line 43 * * figures 2,3 * ----- | 1-15 | INV. H04M9/08 |
| A | US 9 595 997 B1 (YANG JUN [US]) 14 March 2017 (2017-03-14) * column 10, line 40 - column 1257 * ----- | 1-15 | |
| A | JP 2005 217547 A (MATSUSHITA ELECTRIC WORKS LTD) 11 August 2005 (2005-08-11) * paragraph [2536] * ----- | 1-15 | |

| | |
|---|---|
| | **TECHNICAL FIELDS SEARCHED (IPC)** |
| | H04M G10L |

The present search report has been drawn up for all claims

| Place of search | Date of completion of the search | Examiner |
|---|---|---|
| The Hague | 19 January 2026 | Sorrentino, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 708 837 A1**

## ANNEX TO THE EUROPEAN SEARCH REPORT
## ON EUROPEAN PATENT APPLICATION NO.

EP 25 19 6135

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | | Publication date | Patent family member(s) | | Publication date |
|---|---|---|---|---|---|
| EP 0798912 | A2 | 01-10-1997 | CA | 2199308 A1 | 28-09-1997 |
| | | | EP | 0798912 A2 | 01-10-1997 |
| | | | JP | H1013501 A | 16-01-1998 |
| | | | US | 5859908 A | 12-01-1999 |
| US 9595997 | B1 | 14-03-2017 | NONE | | |
| JP 2005217547 | A | 11-08-2005 | JP | 4367143 B2 | 18-11-2009 |
| | | | JP | 2005217547 A | 11-08-2005 |

EPO FORM P0459

For more details about this annex : see Official Journal of the European Patent Office, No. 12/82

33